# EUROPEAN PATENT APPLICATION

(11) **EP 1 707 262 A1**
(43) Date of publication of application: **04.10.2006**
(21) Application number: 06003624.1
(22) Date of filing: 22.02.2006
(51) Int. Cl.: B01J 23/63, B01J 23/00, B01J 23/10, B01D 53/94, C01F 17/00

(54) **Exhast gas purification catalyst**

(30) Priority: 31.03.2005 JP 2005101721
(71) Applicant: Mazda Motor Corporation, Aki-gun, Hiroshima 735-8670 (JP)
(72) Inventor: Kawabata, Hisaya, Aki-gun Hiroshima-ken 730-8670 (JP); Shigeetsu, Masahiko, Aki-gun Hiroshima-ken 730-8670 (JP)
(74) Representative: Müller-Boré & Partner Patentanwälte

(57) **Abstract**

In a catalytic matter or catalytic converter comprising a catalytic layer positioned on a carrier and comprising the catalytic matter, in order to improve the light-off performance, the catalytic matter is a cerium-magnesium compound oxide. The compound oxide has a preferable range of molar ratio Mg/(Ce+Mg) between about 3 and about 50%.

## Description

The present invention generally relates to an exhaust gas purification catalyst, and more particularly to a catalytic converter having an oxide layer loaded with catalytic metal.

A catalytic converter is conventionally used for removing hydrocarbon (hereinafter referred to HC), carbon monoxide (CO) and nitrogen oxide(s) (NOx) in exhaust gas flowing from such as an internal combustion engine of an automotive vehicle.

There is known a catalytic converter having a catalytic layer containing oxides, such as a cerium oxide, loaded with a catalytic precious metal, such as palladium, formed on a honey-comb shaped carrier. The cerium oxide is known to have oxygen storage capacity (OSC) as co-catalyst of the exhaust gas purification catalyst. It may store oxygen when oxygen concentration in the exhaust gas is high or air fuel ratio of the exhaust gas is lean and discharge oxygen when rich so that it can control air fuel ratio of exhaust gas to be stoichiometric and maintain purification performance of the catalyst even if the air fuel ratio of exhaust gas fluctuates between rich and lean sides.

U.S. Patents 5,478,543, 5,580,536 and 5,582,785 describe a compound oxide containing cerium oxide, zirconium oxide and hafnium oxide or compound oxide containing a fourth constituent in addition to them thereby to store and discharge oxygen at 400 - 700 °C better than an oxide having cerium oxide as its primary constituent and to prevent decrease of specific surface area at higher temperatures. Further, Japanese Patent Application Publication H06-246155, European Patent Application EP 1 053 779 A1 and U.S. Patents 5,958,828 and 6,350,421 show compound oxides containing cerium oxides.
Recent years, automotive vehicles are required to improve the fuel efficiency. For this purpose, fueling amount during engine startup may be relatively regulated. Inventors herein have recognized the following disadvantage of the prior approaches when the engine is controlled in that manner. That is, the exhaust gas may become relatively lean with less oxygen and the exhaust gas temperature may be lower, so that the above-mentioned oxygen storage capacity of the oxides may not sufficiently exist and the catalyst may not be sufficiently active, which may lead to a lower purification performance in that condition. The inventors have discovered that a compound oxide of cerium (Ce) and magnesium (Mg) overcomes the above described disadvantage of the prior approaches.
The solution to the above technical problem is achieved by providing the subject matter defined in the claims.
In particular, according to the present invention, there is provided a catalytic matter or catalyst for exhaust gas purification comprising a cerium-magnesium compound oxide; and a catalytic metal loaded on said compound oxide.
The catalytic matter according to the present invention may be produced by a method comprising the steps of preparing a cerium-magnesium compound oxide; and loading catalytic metal on said compound oxide to form said catalytic matter.
According to another aspect of the present invention, there is provided a catalytic converter for exhaust gas purification comprising a carrier, an oxide layer positioned on the carrier and comprising a compound oxide of cerium (Ce) and magnesium (Mg) with its molar ratio of Mg/(Ce+Mg) preferably between about 3 and about 50 mol.%, and a catalytic metal, for example a precious metal such as palladium (Pd), platinum (Pt) and rhodium (Rh), loaded on the oxide layer.

By comprising the compound oxide of cerium and magnesium in the oxide layer, higher purification performance or lower light-off temperature can be obtained under the lean exhaust gas condition during the engine startup. This is supposedly because of the following reason. When the exhaust gas is lean, the oxygen storage capacity of the cerium oxide may be saturated and the catalytic metal may keep its oxidized form in other words being metal oxide such as palladium oxide (PdO) then may not release the oxygen for oxidizing hydrocarbon (HC) in the exhaust gas. The magnesium oxide in the compound oxide is regarded as a basic oxide, which may give away electrons and promote a reduction of the metal oxide to convert it back into the metal form. After the reduction caused by the lean atmosphere, the catalytic metal may be oxidized again by the oxygen in the lean exhaust gas so as to repeat this reaction cycle, which leads to more activity of the catalytic metal.
Moreover, according to the present invention, there is provided the use of the catalytic converter as described herein for exhaust gas purification, wherein the air fuel ratio A/F is set between 14.7 ± 0.9 and 15.0 ± 0.9. The advantages described herein will be more fully understood by reading examples of embodiments in which the invention is used to advantage, referred to herein as the Detailed Description, with reference to the drawings wherein:
Figure 1 is a graph depicting a relationship between a HC light-off temperature (T50) and air fuel ratio for catalysts on a Ce-Mg compound oxide (a molar ratio of Mg/(Ce+Mg) is 20 mol.%) according to the present invention and various oxides according to comparative examples;
Figure 2 is a graph depicting a relationship between HC, CO and NOx light-off temperatures (T50) under the stoichiometric exhaust gas condition and the molar ratio of Mg/(Ce+Mg) for the catalysts on Ce-Mg compound oxides according to the present invention and mixtures of cerium oxide and magnesium oxide of comparative examples;
Figure 3 is a graph depicting a relationship between a high temperature purification performance (C400 - a purification efficiency at 400°C) of HC, CO and NOx under the stoichiometric exhaust gas condition and the molar ratio of Mg/(Ce+Mg) for the catalyst on Ce-Mg compound oxides according to the present invention and mixtures of cerium oxide and magnesium oxide of comparative examples;
Figure 4 is a graph depicting a relationship between the HC light-off temperature (T50) and the molar ratio of Mg/(Ce+Mg) for the catalysts on Ce-Mg compound oxides according to the present invention and mixtures of cerium oxide and magnesium oxide of comparative examples;
Figure 5 is a graph depicting a result of XPS analysis showing oxidized and reduced states of the catalytic metals on the Ce-Mg compound oxide according to the present invention and mixtures of cerium oxide and magnesium oxide of comparative example; and
Figure 6 is a diagram explaining light-off performance improvement of the Ce-Mg compound oxide according to the present invention.
The cerium-magnesium compound oxide is a compound oxide comprising magnesium ions and cerium ions, wherein the oxygen counterions are arranged at particular positions in the crystal lattice formed by said magnesium ions and cerium ions. Thus, the cerium-magnesium compound oxide clearly differs from a simply physical mixture of cerium oxide and magnesium oxide, as explained below. According to a preferred embodiment, the cerium-magnesium compound oxide has a fluorite type crystal structure.
The cerium-magnesium compound oxide as used in the catalytic matter or catalytic converter according to the present invention may be obtained by
(a) mixing at least one magnesium compound, preferably a magnesium salt, and at least one cerium compound, preferably a cerium salt, in a solvent, preferably water,
(b) neutralizing said solution or slurry, if necessary,
(c) collecting the precipitated or co-precipitated matter and removing the solvent therefrom, and
(d) drying and baking to form a cerium-magnesium compound oxide.
Preferably as starting materials, a Mg salt such as Mg nitrate and a Ce salt such as Ce nitrate are used. Appropriate amounts of them are mixed so as to make a mixture having a mixing ratio of, for example, 20 mol.% Mg - 80 mol.% Ce (Mg content ratio: 20 mol. %). The mixture is added with water and stirred at about room temperature for about one hour. Then, if necessary, a neutralizing process is performed by mixing the solution prepared above and alkaline solution (preferably 28% ammonia water) at about room temperature or elevated temperature such as 80 °C. If a disperser is used for the mixing upon the neutralizing process, preferably its rotational speed may be in a range of 4000-6000 rpm, addition rate of the solution may be such as 53 ml/min, and addition rate of the alkaline solution may be such as 3 ml/min. The solution will be clouded after the neutralizing process. The clouded solution may be left for one day and night to make cake (co-precipitated matter). The cake may be processed in a centrifugal separator, then sufficiently washed e.g. with water. The washed cake is dried at an appropriate temperature, e.g. about 150 °C and baked by keeping it at an appropriate higher temperature, e.g. about 600 °C, for a sufficient time, e.g. about five hours, then, if desired, at about 500 °C for about two hours. Thereafter, the product is crashed into powder of a Ce-Mg compound oxide (hereinafter for simplification also referred to as (Ce-Mg)Oₓ; wherein 1 < x < 2).

Now an embodiment of the catalytic converter of the present invention is described by first describing a preparation method of the Ce-Mg compound oxide described.

### - Preparation of Ce-Mg compound oxide (Examples 1 through 5) -

As starting materials, Mg nitrate and Ce nitrate are provided. Certain amounts of them are mixed so as to make a mixture having a mixing ratio of, for example, 20 mol.% Mg - 80 mol.% Ce (Mg content ratio: 20 mol. %). The mixture is added with water and stirred at a room temperature for about one hour. Then, a neutralizing process is performed by mixing the nitrate solution prepared above and alkaline solution (preferably 28% ammonia water) at a room temperature or heated temperature such as 80 °C. If a disperser is used for the mixing upon the neutralizing process, preferably its rotational speed may be in a range of 4000-6000 rpm, addition rate of the nitrate solution may be such as 53 ml/min, and addition rate of the alkaline solution may be such as 3 ml/min. The solution will be clouded after the neutralizing process.

The clouded solution is left for one day and night to make cake (co-precipitated matter). The cake is processed in a centrifugal separator, then sufficiently water-washed. The water-washed cake is dried at 150 °C and baked by keeping it at 600 °C or so for about five hours then at 500 °C or so for about two hours, and thereafter crashed into powder of Ce-Mg compound oxide (hereinafter may be referred to as (Ce-Mg)Oₓ).

By processing as described, Mg-Ce compound oxides as below (including those with Mg content ratios of 0 mol. % and 100 mol. %) are prepared with various Mg content ratio or molar ratio of Mg/(Ce+Mg) (mol. %) as summarized as the following:

| | Mg molar ratio (mol.%) | Ce molar ratio (mol.%) |
|---|---|---|
| Example 1 - (Ce-Mg)Oₓ | 5 | 95 |
| Example 2- (Ce-Mg)Oₓ | 10 | 90 |
| Example 3- (Ce-Mg)Oₓ | 20 | 80 |
| Example 4- (Ce-Mg)Oₓ | 33 | 67 |
| Example 5- (Ce-Mg)Oₓ | 50 | 50 |

### - Preparation of Ce oxide and Mg oxide (Comparative Examples A1 and A2) -

Comparative Example A1 or cerium oxide powder is prepared by the same procedure as that described above except for only using Ce nitrate as a starting material. Comparative Example A2 or magnesium oxide powder is prepared also by the same procedure as that described for the Examples 1 through 5 except for only using Mg nitrate.

| | Mg molar ratio (mol.%) | Ce molar ratio (mol.%) |
|---|---|---|
| Comparative Example A1 - CeO₂ | 0 | 100 |
| Comparative Example A2 - MgO | 100 | 0 |

### - Preparation of mixtures of Ce oxide and Mg oxide (Comparative Examples B1 through B3) -

By mixing the Ce oxide powder and the Mg oxide powder prepared the same way as the Comparative Examples A1 and A2, Comparative Examples B1 through B3 or mixture of the Ce oxide and Mg oxide are prepared with various Mg content ratio or molar ratio of Mg/(Ce+Mg) (mol. %) as summarized below:

| | Mg molar ratio (mol.%) | Ce molar ratio (mol.%) |
|---|---|---|
| Comparative Example B1 - CeO₂+MgO | 20 | 80 |
| Comparative Example B2 - CeO₂+MgO | 33 | 67 |
| Comparative Example B3 - CeO₂+MgO | 50 | 50 |
| Comparative Example B4 - CeO₂+MgO | 66 | 34 |

### - Preparation of various compound oxides (Comparative Examples C1 through C3) -

By using the same preparation method as that for the Example 3 except for using nitrates of alkaline earth metals instead of Mg nitrate as a starting material, Comparative Example C1 or Ce-Ca compound oxide, Comparative Example C2 or Ce-Sr compound oxide and Comparative Example C3 or Ce-Ba compound oxide are prepared. Content ratios of the alkaline earth metals are all 20 mol.% as that of the Example 3.

### - Loading of catalyst on the oxides -

The oxide powders obtained by the above preparation methods are added with palladium nitrate solution and solidified by evaporating the water and drying the solid matter. Then it is crashed back into powder and heated and baked to obtain palladium loaded oxide powder or catalytic matter. In cases of the Examples 1 through 5, it is palladium loaded Ce-Mg compound oxide powder (hereinafter may be simply referred to Pd/(Ce-Mg)Oₓ, wherein 1 < x < 2).

### - Coating of catalyst layer on a carrier -

The palladium loaded oxide powders or catalytic matter of the Examples and Comparative examples are added with water and binder to be mixed into slurry. Then, a honeycomb shaped carrier of 25.4 mm in diameter and 50 mm in length is dipped into the slurry. After pulling it up from the dip, the excessive water is removed by air blow. Then it is dried, then baked or calcined at 500 °C to obtain catalytic converters or bricks carrying the palladium loaded oxide layers on the carriers.

### - Rig test procedure -

The catalytic converters or bricks obtained with the above preparation method are attached to a fixed-floor through-flow type reaction evaluator, then a test of purification performance for simulated exhaust gas (rig test) is performed. The simulated exhaust gas is set with air fuel ratios A/F=14.7±0.9 (stoichiometric atmosphere) and 15.0 ±0.9 (lean atmosphere). That is, the A/F is compulsorily oscillated with amplitude of ±0.9 by adding and subtracting a certain amount of gas for the oscillation in a pulse shape at a frequency of 1 Hz while constantly flowing mainstream gases of A/F=14.7 and 15.0, respectively. Composition of the mainstream gas of A/F=14.7 is CO₂: 13.9%, O₂: 0.6%, CO: 0.6%, H₂: 0.2%, C₃H₆: 0.056%, NO: 0.1 %, H₂O: 10% and remainder of N₂. That of A/F=15.0 is CO₂: 13.8%, O₂: 0.8%, CO: 0.5%, H₂: 0.1 %, C₃H₆: 0.056%, NO: 0.1 %, H₂O: 10% and remainder of N₂. Inflow rate of the simulated exhaust gas to the catalyst brick is set 25 Uminute (space velocity SV=60000h⁻¹). For the A/F oscillation, when the A/F is forced to the fuel lean side, certain amount of O₂ is added to the mainstream gas, while when the A/F is forced to the fuel rich side, certain amounts of H₂ and CO is added to the mainstream gas. This strategy may apply to both of the cases of A/F=14.7±0.9 and A/F=15.0±0.9.

The simulated exhaust gas flows into the catalyst converter while gradually increasing the simulated exhaust gas temperature. Then, concentrations of constituents of the gas (HC, CO and NOx) flowing out of the catalyst converter are measured downstream of the catalyst. Note that in a diagram illustrating the evaluation results described below, a light-off temperature T50 is a temperature of the simulated exhaust gas at the catalyst inlet at a time when the constituent concentration (e.g. HC concentration) measured downstream of the catalyst converter becomes a half of the original concentration of the simulated exhaust gas. Further, a purification efficiency C400 is a purification efficiency of each constituent at a time when the simulated exhaust gas temperature at the catalyst inlet is 400 °C.

### - Identification procedure for oxidized state and reduced state of Pd -

A fresh sample (after the 500°C calcination) is set in the fixed-floor through-flow type reaction evaluator, heated under the stoichiometric condition with A/F=14.7±0.9 and the oscillation frequency of 1 Hz from the room temperature through heating rate 30°C/min to 500°C, and after reaching at 500°C, cooled in gas atmosphere solely of N₂ to the room temperature to prepare a test sample. Energy of photoelectron emitted from the surface of the test sample is measured with X ray photoelectron spectroscopy (XPS) analysis while a chemical binding state of Pd is varied. From a relationship between the two parameters, oxidized and reduced states are identified.

### - Rig test result for various catalysts -

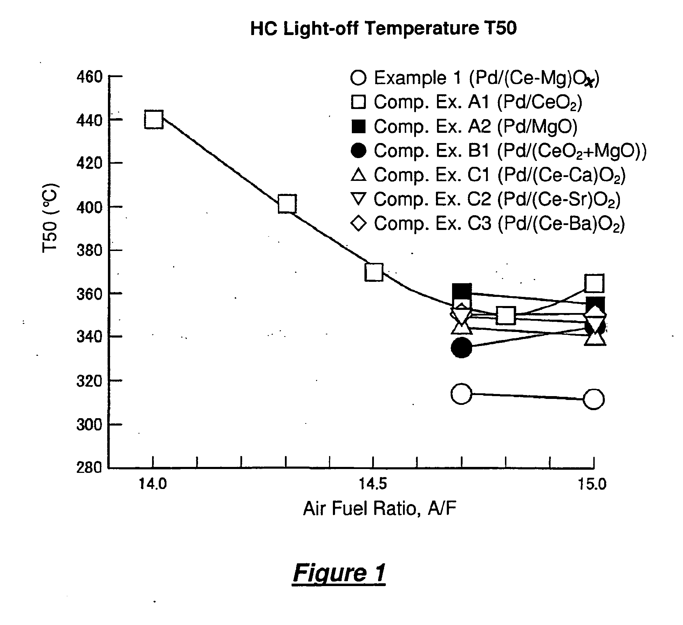

For the catalysts carrying the Ce-Mg compound oxide according to the present invention, influence of the air fuel ratio A/F affecting the light-off performance of HC is shown in Figure 1. Light-off performances of the catalysts of the Example 3 (Pd/(Ce-Mg)Oₓ, Mg/(Ce+Mg) ratio: 20 mol.%) and the Comparative Examples A1 (Pd/CeO₂), A2 (Pd/MgO)), B1 (Pd/(CeO₂+MgO)), Mg/(Ce+Mg) ratio: 20 mol.%) and C1-C3 (Pd/(Ce-Ca)O₂, Pd/(Ce-Sr)O₂ and Pd/(Ce-Ba)O₂) are comparatively shown.

In Figure 1, the Example 3 (Pd/(Ce-Mg)Oₓ) has light-off temperature T50 of 315°C or less to be lower than any comparative examples under both of the stoichiometric condition (A/F=14.7) and the lean condition (A/F=15.0), which means better light-off performance than that of the comparative examples having the other conventional oxides, oxide mixtures and compound oxides. Although the Comparative Example A1 (Pd/CeO₂) shows a light-off temperature T50 decreasing as the air fuel ratio is greater or leaner, the T50 is 354°C under the stoichiometric condition and 362°C under the lean condition, which means worse than the HC light-off performance of the Example 3. The Comparative Examples C1 through C3 (Pd/(Ce-Ca)O₂, Pd/(Ce-Sr)O₂ and Pd/(Ce-Ba)O₂) have slightly improved light-off performances compared to the Comparative Example A1 (Pd/CeO₂), but the improvement can be regarded to be less than that of the Example 3.

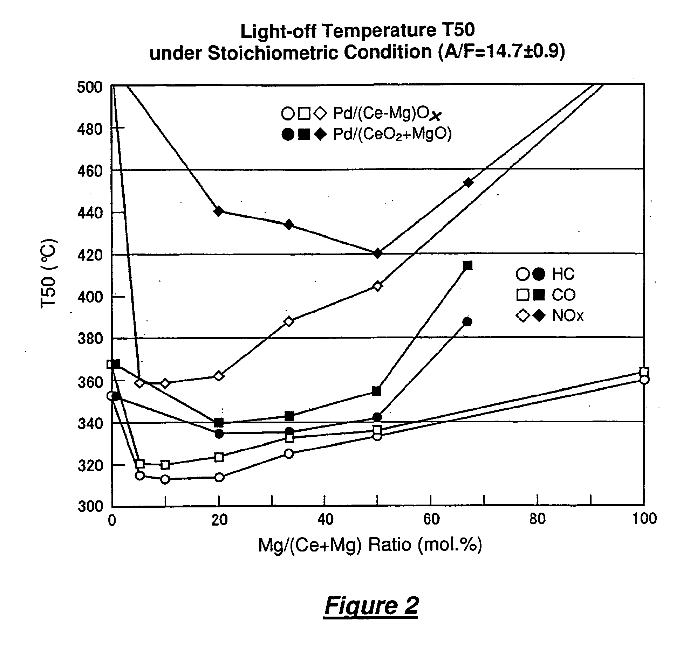

In Figure 2, relationships between the Mg/(Ce+Mg) ratio of the Examples 1 through 5 (Pd/(Ce-Mg)Oₓ) and the respective light-off performances of HC, CO and NOx under the stoichiometric condition (air fuel ratio A/F=14.7) are shown. There are also shown light-off performances of the Comparative Examples A1 (Pd/CeO₂), A2 (Pd/MgO) and B1 through B4 (Pd/(CeO₂+MgO)) as comparative examples. Note that NOx light-off temperatures of the Comparative Examples A1 and A2 are higher than 500°C then not shown in Figure 2 since measurable temperature is 500°C at highest.

Under the stoichiometric condition, while HC light-off temperature of the Comparative Example A1 (Pd/CeO₂) is 355°C to be relatively high, the improvement of the HC light-off performance immediately appears on the Example 1 (Pd/(Ce-Mg)Oₓ) where part of Ce constituent is replaced with 3 mol.% Mg and the HC light-off temperature is rapidly decreased to 315°C or so. The HC light-off temperature stays around the level of 315°C or lower until the Example 3 (Mg/(Ce+Mg) ratio of 20 mol.%), then a gradually increasing tendency is seen beyond that point's ratio. But the HC light-off temperature is controlled to be lower than 335°C until 50 mol.% (Example 5), then is increasing toward 360°C at 100 mol.% of Mg (Comparative Example A2) which temperature is similar level of the Comparative Example A1 (Pd/CeO₂). Although CO light-off temperature is slightly higher than the HC light-off temperature, it shows a generally similar tendency to that of the HC light-off temperature and controlled generally to a lower level of 335°C or lower in a range of the Mg/(Ce+Mg) ratio being 3-50 mol.%. Further in terms of NOx light-off temperature, although it is higher than the HC light-off temperature and the CO light-off temperature, it is generally controlled to a low level of 405°C or lower in a range of the Mg/(Ce+Mg) ratio being 3-50 mol.%. From the foregoing it can be seen that improved light-off performance of HC, CO and NOx can be obtained in a range of the Mg/(Ce+Mg) ratio being 3-50 mol.%, and preferably 5-30 mol.%.

On the other hand, HC, CO and NOx light-off temperatures of the Comparative Examples B1 through B4 (Pd/(CeO₂-MgO)) are lower than that of the Comparative Example A1 (Pd/CeO₂) in a range of the Mg/(Ce+Mg) ratio being 20-50 mol.%, but they are respectively 335-345°C, 340-355°C and 420-440°C to be higher than those of the Examples 1 through 5.

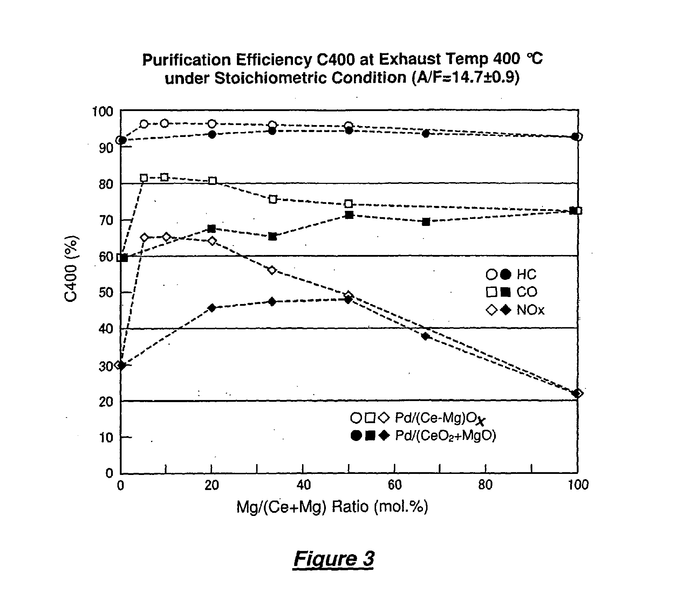

In Figure 3, relationships between the Mg/(Ce+Mg) ratio of the Examples 1 through 5 (Pd/(Ce+Mg)Oₓ) and the respective high temperature purification performances (purification efficiency at 400°C of exhaust gas temperature - C400) of HC, CO and NOx under the soichiometric condition (air fuel ratio A/F=14.7) are shown. There are also shown high temperature purification performances of Comparative Examples A1 (Pd/CeO₂), A2 (Pd/MgO) and B1 through B4 (Pd/(CeO₂₋MgO)) as comparative examples.

Under the stoichiometric condition, while the Comparative Examples A1 (Pd/CeO₂) and A2 (Pd/MgO) show their HC purification efficiencies around 92%, the Examples 1 through 5 (Pd/(Ce+Mg)Oₓ) show higher HC purification efficiencies around 95%. Particularly the Example 1 (Mg/(Ce+Mg) ratio is 3 mol.%) shows the highest HC purification ratio and the HC purification efficiency tends to gradually decrease as the Mg/(Ce+Mg) ratio is greater. The CO purification efficiencies and NOx purification efficiencies also show the similar tendency to the HC purification efficiencies. The CO purification efficiency is above 80% in a range of Mg/(Ce+Mg) being 3-20 mol.% (Examples 1 through 3) and around 75% also in a range of 20-50 mol.% (Examples 4 and 5). Further, the NOx purification efficiency exceeds 65% in a range of the Mg/(Ce+Mg) being 3-20 mol.% (Examples 1 through 3) and maintains higher values around 50% in a range of 20-50 mol.% (Examples 4 and 5).

On the other hand, the Comparative Examples B1 through B4 (Pd/(CeO₂₋MgO)) show HC, CO and NOx purification efficiencies better than those of Comparative Example A1 (Pd/CeO₂) in a range of the Mg/(Ce+Mg) ratio being 20-50 mol.% and they tend to be higher as the Mg/(Ce+Mg) ratio is greater, but show lower purification efficiencies compared to those of the Examples 1 through 5.

From the foregoing, particularly from Figures 2 and 3, it can be seen that under the stoichiometric condition the catalysts of palladium loaded on the Ce-Mg compound oxide of the Examples show the better HC, CO and NOx light-off performances and high temperature purification performance in a range of the Mg/(Ce+Mg) ratio being 3-50 mol.%, preferably 3-33 mol.% and more preferably 5-30 mol.%.

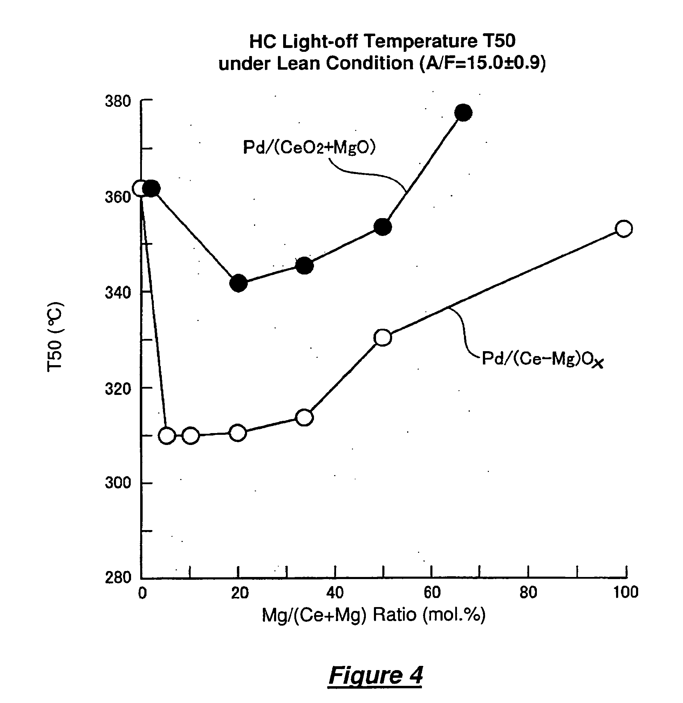

In Figure 4, relationships between the Mg/(Ce+Mg) ratio of the Examples 1 through 5 (Pd/(Ce-Mg)Oₓ) and the respective light-off performance of HC (light-off temperature T50) under the lean condition (air fuel ratio A/F=15.0) are shown. There are also shown light-off performances of the Comparative Examples A1 (Pd/CeO₂), A2 (Pd/MgO) and B1 through B4 (Pd/(CeO₂+MgO)) as comparative examples.

Under the lean condition, while HC light-off temperature of the Comparative Example A1 (Pd/CeO₂) is 360°C to be relatively high, the improvement of the HC light-off performance immediately appears on the Example 1 (Pd/(Ce-Mg)Oₓ) where part of Ce constituent is replaced by 3 mol.% Mg and the HC light-off performance is rapidly decreased to 310°C. And while as the Mg/(Ce+Mg) ratio becomes greater, it is seen that the HC light-off temperature tends to gradually increase. However, the HC light-off temperature is controlled low to 330°C or less until the Mg/(Ce+Mg) ratio being 50% (Example 5). Then finally at the Comparative Example A2 (Pd/MgO), it is increased to a substantially same level as the Comparative Example A1 (Pd/CeO₂). From the foregoing, it can be seen that even under the lean condition the Examples 1 through 5 (Pd/(Ce-Mg)Oₓ) show better HC light-off performance in a range of the Mg/(Ce+Mg) ratio being 3-50 mol.%, preferably 3-33 mol.% and more preferably 5-30 mol.%.

On the other hand, HC light-off temperatures of the Comparative Examples B1 through B4 (Pd/(CeO₂-MgO)) are lower than that of the Comparative Examples A1 (Pd/CeO₂) or A2 (Pd/MgO) in a range of the Mg/(Ce+Mg) ratio being 20-50 mol.%, but they are 340°C or greater to be higher than those of the Examples 1 through 5 (Pd/(Ce-Mg)Oₓ). So it can be seen that the HC light-off performance under the lean condition of the Examples 1 through 5 or the catalysts of Pd loaded on Ce-Mg compound oxide is better than the Comparative Examples or the catalysts of Pd loaded on mixture of Ce oxide and Mg oxide or on solely Ce oxide or Mg oxide.

### - Oxidized state and reduced state of Pd -

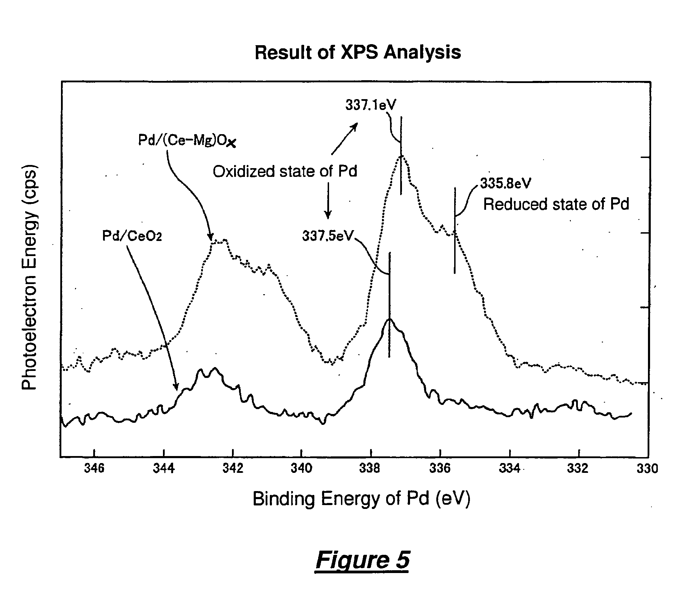

Figure 5 is a graph showing a result of the XPS analysis described above. It illustrates oxidized state and reduced state of the catalyst metal Pd in the Example 3 (Pd/(Ce-Mg)Oₓ, Mg/(Ce+Mg) = 20 mol.%) and the Comparative Example A1 (Pd/CeO₂). The horizontal axis of the graph indicates a binding energy (eV) of 3d orbital electrons of Pd and the vertical axis indicates a detected relative strength (cps) of a photoelectron.

The Example 3 distinctively shows two peaks the relative strength of photoelectron where the binding energy of 337.1 eV indicates Pd is oxidized and 335.8 eV indicates Pd is reduced. It indicates Pd in the Example 3 takes both of the oxidized and reduced forms. On the other hand the Comparative Example A1 shows only a peak of the relative strength at the binding energy of 337.5 eV, which indicates that Pd in the Comparative Example A1 is more likely to take a more highly oxidized state. Here, "more highly oxidized state" means such as the following. That is, oxides of Pd which can be expressed with a general formula PdOx. PdO, PdO₂ and so forth are considered to exist. Then, a peak of binding energy of PdO₂ appears around 338.0 eV (more precisely 337.8 - 338.2 eV). Further, the binding energy is greater as the value x of PdOx is greater. So, the greater value x means the more highly oxidized state. Accordingly, it can be considered that the peak at 337.5 eV of the Comparative Example A1 indicates a more highly oxidized state because it is closer to the peak of PdO₂ at 338.0 eV than that of the Example 3 at 337.1 eV. In such a highly oxidized state, a surface of Pd is covered by oxygen to reduce the inherent catalytic activity. Therefore, in order to achieve higher catalytic activity as the Example 3, it is considered necessary to have PdO exist which is a state between metal Pd and highly oxidized PdO₂.

### - Mechanism of catalyst performance improvement -

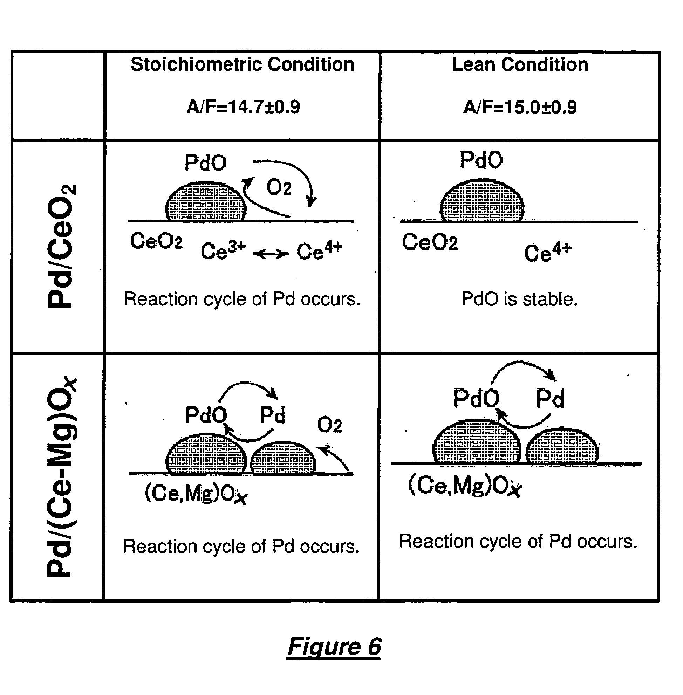

From the above XPS analysis result, a mechanism of the light-off performance improvement is presumed as described below and illustrated in Figure 6.

In a case of the Comparative Example A1 (Pd/CeO₂), although the light-off performance is good under the stoichiometric condition, it is deteriorated under the lean condition, as described above, particularly referring to Figures 2 and 4. It is considered that palladium needs to take an oxidized state such as PdO to oxidize HC. In order to have PdO, it is necessary to make a reaction cycle (PdO→Pd→PdO) where Pd is once reduced then oxidized. It is considered that under the stoichiometric condition a change of number of valence of Ce between trivalence and tetravalence (Ce³⁺;Ce⁴⁺) causes adsorption and discharge of oxygen ion which may promote the cycle of PdO→Pd→PdO, so that the HC oxidization reaction proceeds.

On the other hand under the lean condition, Ce is steadily tetravalent (Ce⁴⁺) and likely to be saturated with stored oxygen so that the adsorption and release of oxygen may not be likely to occur. Accordingly, it is considered that the reaction cycle of PdO→Pd→PdO may be unlikely to proceed or Pd is stable at the metal form so that the HC light-off performance may be deteriorated.

As indicated by the XPS analysis described above, Pd in the catalysts of the Examples (Pd/(Ce-Mg)Oₓ) may be considered to have both of the oxidized state and the reduced state, which means the reaction cycle of PdO→Pd→PdO so as to oxidize HC in the same way as the Comparative Example A1 (Pd/CeO₂) under the stoichiometric condition.

Under the lean condition where the adsorption and discharge of oxygen from the catalytic metal is unlikely to occur, MgO in the Examples (Pd/(Ce-Mg)Oₓ) shows an effect of promoting reduction of the catalytic metal at its oxidized state. This is presumably because MgO is a basic oxide and has a tendency of giving electrons away so that the electrons reduce or convert the oxidized or ionized palladium to a metal form. Then, the reduced palladium is oxidized again by oxygen in the lean atmosphere to form MgO so as to promote the reaction cycle mentioned above, which means that the catalyst metal in the Examples is not kept at highly oxidized state then the performance under the lean condition is improved. However, even if MgO is used, in a case of the Comparative Examples B1 thorugh B4 where MgO is used as a form of mixed oxide instead of the compound oxide of the Examples, the performance is not enough. So it is essential to use Mg as a constituent of the compound oxide between Ce and Mg.

It is needless to say that the present invention is not limited to the embodiment and the examples described above and that various improvements and alternative designs are possible without departing from the substance of this invention as claimed in the attached claims. For example, although in the above embodiment palladium is solely adopted as catalytic metal, any other metal having a catalytic activity such as other precious metal, for example platinum (Pt) or rhodium (Rh) in stead of or in addition to palladium. Also the catalytic metal may be loaded on the compound oxide as a metal form or an oxidized form or preferably mixed form thereof, since the above mentioned reaction cycle of such as PdO→Pd→PdO may promote the catalytic reaction under the lean condition. Further an additional matter may be incorporated into the compound oxide for any other purpose.

## Claims

1. Catalytic matter for exhaust gas purification comprising:
a cerium-magnesium compound oxide; and
a catalytic metal loaded on said compound oxide.

2. The catalytic matter as described in claim 1, wherein said compound oxide has a molar ratio of Mg/(Ce+Mg) between about 3 and about 50 mol.%.

3. The catalytic matter as described in claim 2, wherein said compound oxide has a molar ratio of Mg/(Ce+Mg) between about 3 and about 33 mol.%.

4. The catalytic matter as described in claim 3, wherein said compound oxide has a molar ratio of Mg/(Ce+Mg) between about 5 and about 30 mol.%.

5. The catalytic matter as described in any one of the preceding claims, wherein said catalytic metal comprises precious metal.

6. The catalytic matter as described in claim 5, wherein said precious metal comprises palladium (Pd).

7. The catalytic matter as described in claim 6, wherein said catalytic precious metal further comprises an oxidized form of palladium (Pd).

8. A method for manufacturing the catalytic matter as defined in any one of claims 1 to 7, comprising the steps of:
preparing a cerium-magnesium compound oxide; and
loading catalytic metal on said compound oxide to form catalytic matter.

9. The method according to claim 8, wherein the cerium-magnesium compound oxide is obtained by:
(a) mixing at least one magnesium compound and at least one cerium compound in a solvent,
(b) neutralizing said solution or slurry, if necessary,
(c) collecting the precipitated or co-precipitated matter and removing the solvent therefrom, and
(d) drying and baking to form a cerium-magnesium compound oxide.

10. The method as described in claim 8 or 9, wherein said step of preparing the compound oxide uses cerium nitrate and magnesium nitrate as starting material.

11. A catalytic converter for exhaust gas purification, comprising:
a carrier; and
a catalytic layer positioned on said carrier, and
wherein said catalytic layer comprises the catalytic matter as described in any one of the preceding claims.

12. Use of the catalytic converter according to claim 11 for exhaust gas purification, wherein the air fuel ratio A/F is set between 14.7 ± 0.9 and 15.0 ± 0.9.
